# EUROPEAN PATENT APPLICATION

(11) **EP 4 529 183 A1**
(43) Date of publication of application: **26.03.2025**
(21) Application number: 23807284.7
(22) Date of filing: 24.03.2023
(51) Int. Cl.: H04N 21/258, A63F 13/79, A63F 13/86, G06Q 50/10, H04L 67/131, H04L 67/1396, H04N 21/235, H04N 21/239, H04N 21/254, H04N 21/435

(54) **DISTRIBUTION SYSTEM, AND CONTROL PROGRAM AND CONTROL METHOD FOR DISTRIBUTION SYSTEM**

(30) Priority: 18.05.2022 JP 2022081559; 18.05.2022 JP 2022081568
(71) Applicant: Konami Digital Entertainment Co., Ltd., Tokyo 1040061 (JP)
(72) Inventor: WADA, Naoto, Tokyo 104-0061 (JP)
(74) Representative: Hoffmann Eitle
(86) International application number: PCT/JP2023/011725
(87) International publication number: WO 2023/223669

(57) **Abstract**

In a distribution system 100 that distributes distribution data including a moving image to a plurality of user terminals 20 and has a computer 31, wherein the computer 31; receives a posting operation of a comment on the moving image from each of the plurality of user terminals 20; stores posting history information D2 including information indicating a posting tendency of the comment so as to be distinguishable for each of the user terminals 20; performs grouping such that each of the user terminals 20 belongs to at least one of a plurality of groups based on the posting history information D2; extracts the comment posted from the user terminal 20 for each of the groups to which the user terminal 20 belongs as a group comment; and generates the distribution data so as to display a group comment area in which the group comment is displayed.

## Description

### Technical Field

The present invention relates to a distribution system that performs grouping related to display of a comment, and a control program and a control method for the distribution system.

### Background Art

Patent Literature 1 discloses an information communication system in which input information is input from a user terminal at the time of login of the user terminal. A comment server of the information communication system receives an input of information such as a team for which a user is a fan. Then, the comment server generates a sub-thread of a comment according to a user attribute, and generates a small-scale communication space between users having the same attribute.

### Citation List

### Patent Literature

Patent Literature 1: JP2010-152813A

### Summary of Invention

### Technical Problem

In Patent Literature 1, input information is input at the time of login. The input of the input information is troublesome for a viewer. Therefore, the viewer may fail to input the input information or does not input correct information in some cases. In addition, grouping cannot be performed in relation to a comment posted by the viewer on a moving image.

### Solution to Problem

A distribution system according to an aspect described below is a distribution system that distributes distribution data including a moving image to a plurality of user terminals and comprises a computer: wherein the computer receives a posting operation of a comment on the moving image from each of the plurality of user terminals; stores posting history information including information indicating a posting tendency of the comment so as to be distinguishable for each of the user terminals; performs grouping such that each of the user terminals belongs to at least one of a plurality of groups based on the posting history information; extracts the comment posted from the user terminal for each of the groups to which the user terminal belongs as a group comment; and generates the distribution data so as to display a group comment area in which the group comment is displayed.

A control program according to another aspect is a control program for a distribution system that distributes distribution data including a moving image to a plurality of user terminals and includes a computer, the control program causing the computer: to receive a posting operation of a comment on the moving image from each of the plurality of user terminals; to store posting history information including information indicating a posting tendency of the comment so as to be distinguishable for each of the user terminals; to perform grouping such that each of the user terminals belongs to at least one of a plurality of groups based on the posting history information; to extract the comments posted from the user terminals for each of the groups to which the user terminals belong as a group comment; and to generate the distribution data so as to display a group comment area in which the group comment is displayed.

Furthermore, a control method according to another aspect is a control method for a distribution system that distributes distribution data including a moving image to a plurality of user terminals and comprises a computer, wherein the computer: receives a posting operation of a comment on the moving image from each of the plurality of user terminals; stores posting history information including information indicating a posting tendency of the comment so as to be distinguishable for each of the user terminals; performs grouping such that each of the user terminals belongs to at least one of a plurality of groups based on the posting history information; extracts the comment posted from the user terminal for each of the groups to which the user terminal belongs as a group comment; and generates the distribution data so as to display a group comment area in which the group comment is displayed.

As a result, grouping is performed such that each user terminal belongs to at least one of a plurality of groups, and a comment can be displayed for each of the groups.

### Brief Description of Drawings

FIG. 1 is a schematic overall diagram of a distribution system.
FIG. 2 is a schematic explanatory diagram illustrating an example of a distribution screen.
FIG. 3 is a schematic block diagram of the distribution system.
FIG. 4 is a schematic explanatory diagram of history information.
FIG. 5 is a schematic explanatory diagram of grouping.
FIG. 6 is a flowchart of grouping in a first embodiment.
FIG. 7 is a flowchart of grouping in a second embodiment.

### Description of Embodiments

Hereinafter, exemplary embodiments for carrying out the present invention will be described in detail with reference to the drawings. Note that dimensions, materials, shapes, and relative positions of components described in the following embodiments can be arbitrarily set, and can be changed according to a configuration of a device to which the present invention is applied or various conditions. In addition, unless otherwise specified, the scope of the present invention is not limited to the embodiments specifically described below.

### [First Embodiment]

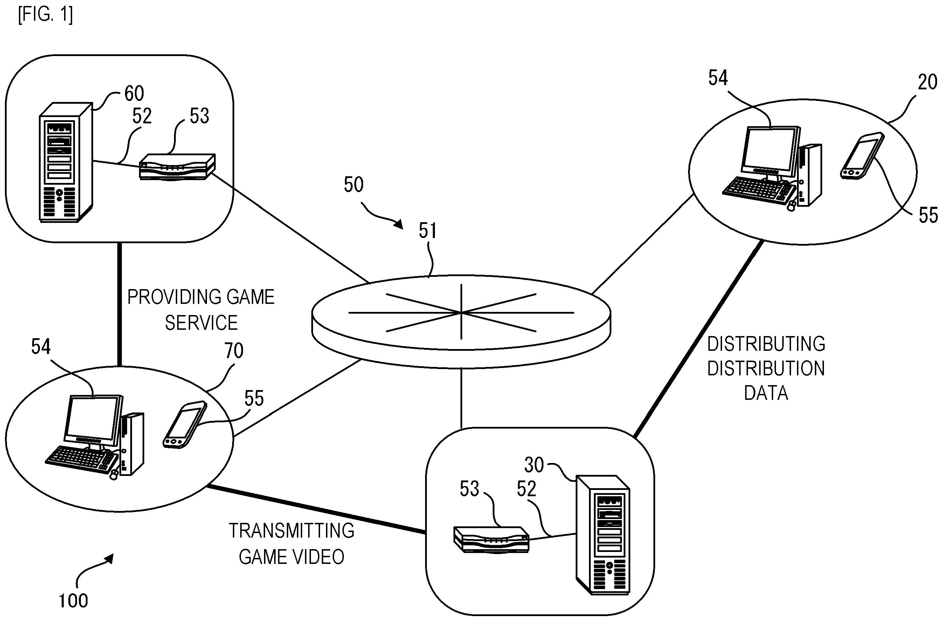

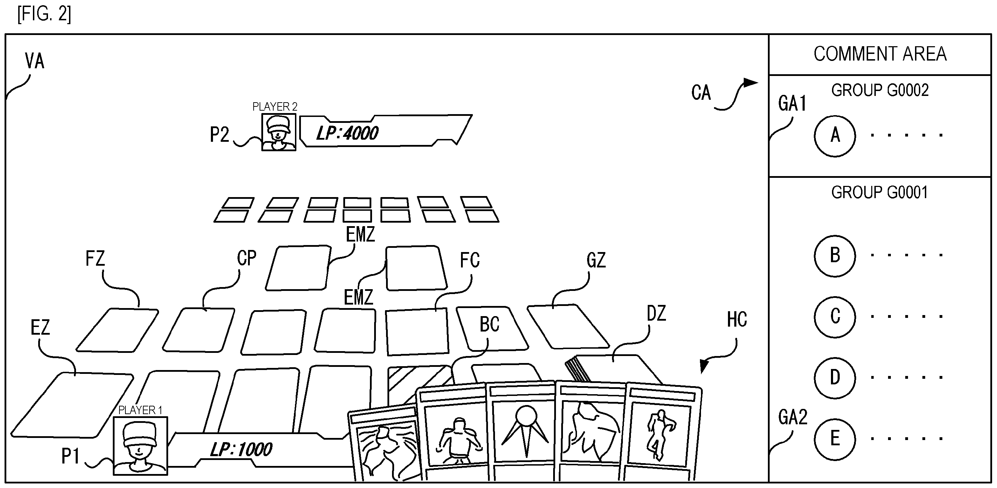

A distribution system 100 illustrated in FIG. 1 distributes distribution data including a moving image to a plurality of user terminals 20. The distribution data is data for causing the user terminals 20 to display moving images (for example, game videos), comments posted from the user terminals 20, a comment area CA (FIG. 2), a group comment, and the like. The user terminals 20 are owned or managed by a plurality of users who are viewers. The distribution system 100 includes a distribution server 30 that distributes the distribution data. The distribution system 100 may further include the user terminals 20, a game server 60, and a game terminal 70 as an example of a game device.

The user terminal 20 can be coupled to the distribution server 30 via a predetermined network 50. As an example, the viewer uses the user terminal 20 at a site of a game tournament, the viewer's home, or the like. The game terminal 70 can be coupled to the game server 60 via the predetermined network 50. As an example, a player of a game uses the game terminal 70 in a predetermined facility such as a site of a game tournament or a store.

Each of the distribution server 30 and the game server 60 is configured as one logical server device by combining server units as a plurality of computers. Note that each of the distribution server 30 and the game server 60 may be configured by a single server unit. Alternatively, each of the distribution server 30 and the game server 60 may be logically configured using cloud computing. Incidentally, the distribution server 30 and the game server 60 can be disposed in one server. For example, the game server 60 can also function as the distribution server 30. Furthermore, the distribution server 30 can also function as the game server 60.

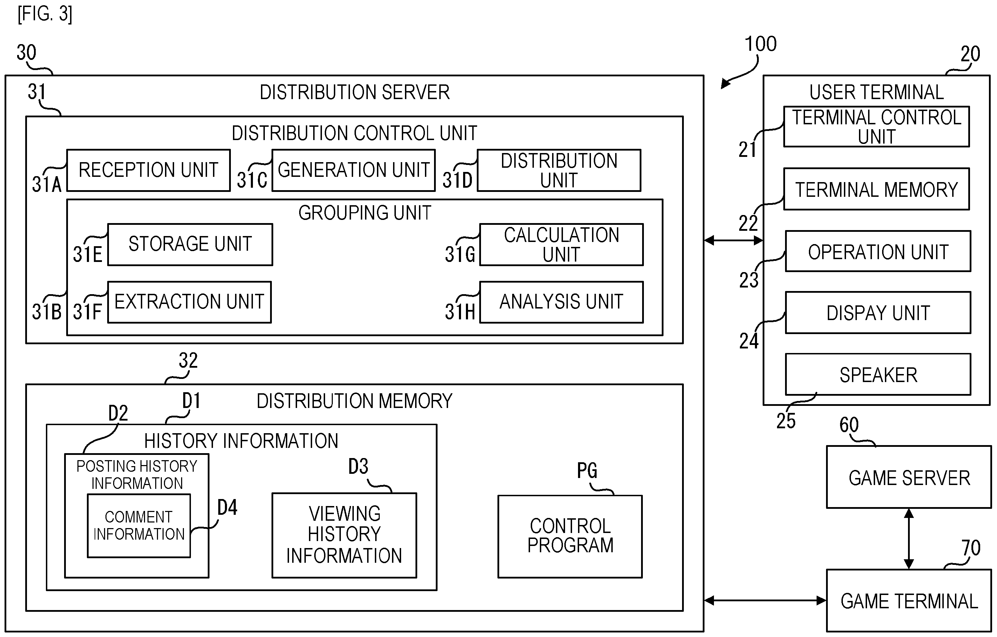

The distribution server 30 receives a post by a user operation input from the user terminal 20 by the viewer, for example, a posting operation of a comment. In addition, the distribution server 30 stores and manages unique information for each viewer associated with user identification information (hereinafter, also referred to as a user ID) for uniquely identifying each viewer. As an example, the distribution server 30 stores and manages the user ID, terminal identification information (hereinafter, also referred to as a terminal ID) for uniquely identifying each user terminal 20, input information such as a content of a posted comment, and history information D1 (FIG. 3) including a posting history and a viewing history of a user. The viewer can input a user operation using the user terminal 20. For example, the viewer can post a support comment to a player in a comment input area displayed on the user terminal 20.

Furthermore, by performing a touch operation on an icon displayed on the user terminal 20, the viewer can input a user operation of providing or contributing a reward to the player or the like. The distribution server 30 that has received the input by the user operation associates the input information and the like with the user ID and the terminal ID, and stores and manages it. In addition, the distribution server 30 provides a distribution service for viewing the moving image to the user terminal 20 or a viewer who owns the user terminal 20. For example, the distribution server 30 acquires a game video from the game terminal 70, generates the distribution data including the game video, and distributes the distribution data to the user terminal 20.

Incidentally, the terminal identification information is information for uniquely identifying the user terminal 20 of each viewer. Alternatively, the terminal identification information may be an Internet protocol (IP) address or a media access control (MAC) address.

The distribution service includes a distribution service that distributes and updates a program or data for the user terminal 20 via the network 50. The distribution server 30 appropriately distributes various programs or data necessary for viewing the moving image to each user terminal 20 through the distribution service. As an example, the moving image includes a game video of a game played by the game terminal 70, a game video created by photographing a game screen or the like, and a game-related video such as a video obtained by photographing a player of a game, a spectator watching the game, or the like. Alternatively, the moving image may include other videos such as a movie, a drama, an animation, and a variety show. Hereinafter, an example in which the moving image is a game video will be mainly described.

As an example, the distribution server 30 provides a Web service to a user of the user terminal 20 via the network 50. In the Web service, when the distribution server 30 provides a distribution service, the moving image reproduced by the user terminal 20 is distributed. Incidentally, the Web service may include other services such as an information providing service that provides various types of information regarding the moving image, a community service that provides a place for interaction such as transmission, exchange, and sharing of information by viewers, and a service that imparts a user ID for identifying each viewer.

In addition, the distribution server 30 distributes the distribution data including a game video uploaded from the game terminal 70. Alternatively, the distribution server 30 may distribute a game video received from a device (for example, the game server 60) other than the game terminal 70. Furthermore, the distribution server 30 may distribute a game video created by a player of a game or another distributor and uploaded from a terminal such as a personal computer. In this case, the distribution server 30 distributes the distribution data including the game video uploaded by the player or another distributor to the user terminal 20.

The game server 60 provides various services for a game device to the game terminal 70 or a user of the game terminal 70. The service includes a distribution service that distributes and updates a program or data for the game terminal 70 via the network 50. The game server 60 appropriately distributes various programs or data necessary for providing a game service to each game terminal 70 through the distribution service. Alternatively, a plurality of the game terminals 70 may execute a game by communicating with each other in a peer-to-peer manner without the game server 60 interposed therebetween. Alternatively, the game terminal 70 may execute a game without communicating with another game terminal 70.

As an example, the game server 60 provides a service for a trading card game. In addition, the game server 60 may provide a service for a sport game, for example, a baseball game including a training part for training a baseball player and a battle part for causing a team to which the trained baseball player belongs to fight against an opponent team. Incidentally, the game server 60 may provide services for other games such as a first person shooting (FPS) game, a third person shooting (TPS) game, a real-time strategy (RTS) game, a multiplayer online battle arena (MOBA) game, a massively multiplayer online roll playing game (MMORPG), a fighting game, a racing game, a puzzle game, and an online strategy game.

A service for a game device may include a service in which the game server 60 receives player identification information (hereinafter, also referred to as a player ID) for uniquely identifying a player from the game terminal 70 and authenticates the player. In addition, the service for the game device may include a service in which the game server 60 receives and stores a video of a game screen or play data including a play result of the authenticated player from the game terminal 70. Furthermore, the service for the game device may include a service for providing the play data stored by the game server 60 to the game terminal 70. In addition, the service for the game device may include a service in which the game server 60 matches players when a plurality of players play a common game via the network 50. In addition, the service for the game device may include a service in which the game server 60 collects a fee from a player.

The network 50 is configured to be able to couple the user terminal 20 and the game terminal 70 to the distribution server 30 and the game server 60, respectively. As an example, the network 50 is configured to implement network communication by using a TCP/IP protocol. Specifically, a local area network 52 couples each of the distribution server 30 and the game server 60 to the Internet 51. The Internet 51 as a wide area network and the local area network 52 are coupled via a router 53.

The user terminal 20 and the game terminal 70 are also configured to be coupled to the Internet 51. Alternatively, the distribution server 30 and the game server 60 may be coupled to the user terminal 20 and the game terminal 70 via the Internet 51 instead of or in addition to the local area network 52. Incidentally, in FIG. 1, a thin line indicates coupling to the Internet 51, and a thick line indicates a service to be provided, information to be transmitted, and the like. The thick line does not indicate that devices directly communicate with each other, but the devices may be configured to directly communicate with each other.

The user terminal 20 and the game terminal 70 are computer devices capable of network coupling. For example, each of the user terminal 20 and the game terminal 70 includes a stationary or book type personal computer 54 and a mobile terminal device 55 such as a mobile phone (including a smartphone). In addition, various computer devices such as a stationary home game device, a portable game device, and a portable tablet terminal device are included in each of the user terminal 20 and the game terminal 70. Various types of computer software are mounted on each of the user terminal 20 and the game terminal 70, whereby the user terminal 20 and the game terminal 70 can allow a user to enjoy various services provided by the distribution server 30 and the game server 60. Specifically, the user terminal 20 functions as a display terminal of the moving image through video reproducing software. In addition, the game terminal 70 functions as a game device through software for a game device. Incidentally, each of the user terminal 20 and the game terminal 70 may be an arcade game machine.

As an example, in the distribution system 100, the game server 60 provides a game service to the game terminal 70. A player records a game video of a game played by the game terminal 70 or a game video created by photographing a game screen or the like in the game terminal 70 or another device. The game video may be a game-related video such as a video obtained by photographing a player of the game or a spectator watching the game. The player or a distributor transmits the recorded game video to the distribution server 30. Then, the distribution server 30 distributes the distribution data including the received game video to the user terminal 20. Incidentally, the distribution data may include all pieces of data of the moving image, or may include only some pieces of data of the moving image in a streaming distribution format.

### [Overview of distribution service]

In a distribution service by the distribution system 100, a viewer viewing the moving image can perform a posting operation of posting a comment. At this time, the distribution server 30 distributes the comment to all viewers or a plurality of user terminals 20 which are a part of the viewers. FIG. 2 illustrates a distribution screen as an example. In the distribution screen of FIG. 2, a moving image area VA is provided on a left side, and a comment area CA in which the comment posted by the viewer is displayed is provided on a right side. While viewing the distributed moving image, the viewer posts a comment of impression or support, or a comment for the purpose of communication between viewers. As a result, when the moving image is viewed, more diversified ways of enjoyment can be provided, a satisfaction level of the viewer can be increased, and willingness to view the moving image can be improved.

For example, in the example of FIG. 2, a game video of a trading card game is displayed in the moving image area VA. Specifically, the trading card game is advanced using a game field as an example of a place where a player P1 and a player P2 are to dispose cards. A plurality of card placement places CP are set in the game field. As an example, ten card placement places CP are set for each player. In addition, in the game field, a cemetery zone GZ where broken or used cards are placed and a field zone FZ where field magic cards that affect the entire field are placed are set.

In addition, in the game field, an extra deck zone EZ where cards that can be summoned by a special method are placed and a deck zone DZ where a deck is placed are set. Furthermore, an extra monster zone EMZ is set so as to overlap a boundary between a game field of the player P1 and a game field of the player P2. The player P1 and the player P2 can select either one of the two extra monster zones EMZ and place a card summoned by a special method.

Each player forms a deck to be used in the game from a large number of cards owned by the player, and advances the game while appropriately disposing the cards included in the deck in the card placement place CP or each zone. In the game, each player holds some cards as hands HC. For example, in FIG. 2, the player P1 holds five cards as the hands HC. In addition, the player P1 places a front-side display card FC and a back-side display card BC in the card placement place CP.

The game progresses in a so-called turn-based system in which turns are alternately repeated between players. First, as preparation for the game, for example, a deck of each player is shuffled and then disposed in the deck zone DZ, and a predetermined number of cards are drawn from the deck of the player and held as the hands HC. When the preparation is completed, the game is started from a turn of a player who attacks first. One turn is divided into a plurality of phases. The phase is a concept for dividing a procedure to be performed in one turn into a plurality of stages according to contents and properties thereof. Thereafter, each player selects an appropriate action within a range determined for each phase. Then, when a predetermined end condition is satisfied while the turns are alternately repeated, the game ends. For example, the end condition is satisfied when a value of a parameter such as a life point set to each player decreases to a predetermined value (for example, zero) due to a battle.

As an example, to the user terminal 20 of each viewer, the distribution data including a game video of a game played between the game terminals 70 that perform mutual communication is distributed. The game terminal 70 generates a game video from a game screen and records the game video. A player who is a distributor uploads the game video to the distribution server 30. Alternatively, a commentator that makes a commentary of another person's game may upload a commentary video from a device managed by the commentator to the distribution server 30.

In addition, when both players are viewing the same game screen as in a fighting game or a sport game, a game terminal 70 serving as a host acquires the game screen from one of the game terminals 70 and generates a game video. Furthermore, when players are viewing different game screens such as in an FPS game or a TPS game, the game server 60 acquires the game screens from each of the game terminals 70 and generates a game video.

Furthermore, the game terminal 70 or the game server 60 may use game operation information by a player, NPC control information when there is an NPC, and the like. In this case, the game terminal 70 or the game server 60 generates a game video by starting the game and regenerating a game screen based on the received game operation information or the like. Alternatively, the distribution server 30 may acquire game operation information or the like via the game terminal 70 or the game server 60. In this case, the distribution server 30 generates a game video by regenerating a game screen.

Here, a viewer who views the game video posts impression of the game or the like as the comment. A posting operation of posting the comment can be implemented by a function of an application program installed in advance in the user terminal 20. The application program can be downloaded from the distribution server 30, the game server 60, and other external servers. Alternatively, the posting operation may be implemented by a function of a Web page provided by the distribution server 30.

For example, when a viewer starts an application program, a moving image area VA in which the moving image is displayed and an input area (not illustrated) for inputting the comment are displayed on the user terminal 20. At the same time, a comment area CA in which the distributed comment is displayed is displayed on the user terminal 20. The moving image area VA, the input area, and the comment area CA are displayed separately, and the viewer can perform the posting operation in the input area. Alternatively, similar area division and operation input may be implemented on a Web page provided by the distribution server 30.

At this time, when all the posted comments are displayed, a large number of comments are displayed for all viewers who view the same moving image. For example, the number of viewers may be thousands or tens of thousands depending on the moving image, and the number of comments on such the moving image is very large. On the other hand, there is a limit to the number of comments that can be displayed in the comment area CA. As a result, even if a viewer posts a comment, the comment disappears from the comment area CA in a short time. Therefore, it is difficult for a viewer to confirm the content of the displayed comment, and willingness to post the comment and willingness to view the moving image are reduced.

Furthermore, when the moving image of a battle game is distributed, there may be bias in popularity of players. In this case, the number of comments for a player with few fans decreases, and the number of comments for a player with many fans increases. Therefore, it is difficult for a viewer who supports the player with few fans to find the comment to support the player supported by the viewer. For this reason, the viewer reduces willingness to post the comment and willingness to view the moving image.

Furthermore, the comment of a viewer viewing over a long period of time may include a technical term, a commonly used abbreviation, or the like. Therefore, for a viewer who has just started watching the moving image, there are many comments including difficult terms in the comment area CA. For example, when the viewer is a beginner of a game, the comment including a technical term of the game is difficult for the viewer. Therefore, when there are many difficult comments, the viewer reduces willingness to post the comment and willingness to view the moving image.

Therefore, in the distribution system 100 described below, grouping is performed such that each user terminal 20 belongs to at least one of a plurality of groups. As a result, only comments of a grouped specific group can be displayed. Therefore, an appropriate number of comments or a more appropriate content comment is displayed on the user terminal 20. Incidentally, in the description of the present specification, that the user terminal 20 used by a viewer belongs to a group may be expressed as that the viewer belongs to the group.

### [Control system of distribution system]

Next, a control system of the distribution system 100 that distributes the distribution data including the moving image to the plurality of user terminals 20 will be described with reference to FIG. 3. First, the distribution server 30 includes a distribution control unit 31, a distribution memory 32, and a communication unit (not illustrated). The distribution control unit 31 receives an input by a viewer's user operation from the user terminal 20. The distribution control unit 31 executes various controls for distributing a game video received from the game terminal 70. The distribution memory 32 memorizes a control program PG and history information D1 used for grouping.

Distribution of the moving image by the distribution server 30 is in a format of distributing the moving image to the user terminals 20 simultaneously, and may be in a format of live distribution which is distribution in real time, or may be in a format of an archive manner not in real time, for example, in a format of distributing an edited video. In addition, the distribution of the moving image by the distribution server 30 is not limited to the format of simultaneous distribution, and may be in a format of on-demand distribution in which distribution is individually performed by an operation of each user.

The distribution control unit 31 is configured as a computer in which a processor that executes various types of arithmetic processing and operation control according to a predetermined program, an internal memory necessary for an operation of the processor, and other peripheral devices are combined. That is, the distribution control unit 31 functions as a computer included in the distribution system 100. As an example, each of these processors is a central processing unit (CPU) or a micro-processing unit (MPU), and controls the entire device based on a predetermined program and also integrally controls various types of processing. For example, when the distribution control unit 31 receives the posting operation or when a viewer views the moving image, the distribution control unit 31 generates the history information D1. As an example, the distribution control unit 31 generates the history information D1 so as to include the user ID of the viewer and comment information D4 such as a content of the comment associated with the user ID. For example, the distribution control unit 31 acquires the user ID when the viewer logs in.

A display device that displays an input state, a setting state, a measurement result, and various types of information of the device is coupled to the distribution control unit 31 in a wired or wireless manner. In addition, an operation device including a keyboard or various switches for inputting predetermined commands and data is coupled to the distribution memory 32 in a wired or wireless manner. Incidentally, the distribution control unit 31 can also perform control according to a program stored in a portable recording medium such as a compact disc (CD), a digital versatile disc (DVD), a compact flash (CF) card, or a universal serial bus (USB) memory, or an external storage medium such as a server on the Internet.

The distribution memory 32 is a memory device including a computer-readable non-transitory memory medium. The distribution memory 32 includes a random access memory (RAM) that is a system work memory for a processor to operate, and a memory device that stores a program and system software, such as a read only memory (ROM), a hard disc drive (HDD), or a solid state drive (SSD). The processor can execute processing operations such as various calculations, controls, and determinations according to a program memorized in the ROM or the HDD. The control program PG functions as a computer program of the distribution system 100. Incidentally, the distribution memory 32 may hold all the data in one memory device, or may memorize the data in a plurality of memory devices in a distributed manner.

The game server 60 includes a game control unit, a game memory, and a communication unit (not illustrated). The game control unit executes various controls for providing a game service to the game terminal 70. The game memory memorizes a control program of the game server 60, player data that is information related to a player of a game, and game data that is information related to the game. As an example, the player data includes a player ID, personal information of a player, and the like. The game data includes various data such as image data, BGM data, and play data of the player. The play data is data for taking over a content unique to each player such as a play history (for example, past record) of the player to a subsequent play.

The user terminal 20 includes a terminal control unit 21, a terminal memory 22, an operation unit 23 as an operation device, a display unit 24 as a display device, a speaker 25 as a voice output device, and a communication unit (not illustrated). The terminal memory 22 memorizes a control program (not illustrated) of the user terminal 20 and a reproduction program of the moving image which is an example of an application program. The terminal control unit 21 controls the user terminal 20 and executes the reproduction program to display a distribution screen on the display unit 24.

The operation unit 23 is an operation device such as a controller or a touch panel, and receives an input by a viewer's user operation including the posting operation. The display unit 24 is a display device such as a television, a display, or a touch panel, and displays a game video viewed by a user. The operation unit 23 and the display unit 24 may be integrally configured as a display operation unit such as a touch panel. As the game video is reproduced, the speaker 25 outputs related voice such as game voice. Incidentally, the operation unit 23, the display unit 24, and the speaker 25 may be integrated with or separated from the user terminal 20.

The terminal control unit 21 is configured as a computer in which a processor that executes various types of arithmetic processing and operation control according to a predetermined program, an internal memory necessary for an operation of a processor, and other peripheral devices are combined. As an example, each of these processors is a central processing unit (CPU) or a micro-processing unit (MPU), and controls the entire device based on a predetermined program and also integrally controls various types of processing. Incidentally, the terminal control unit 21 can also perform control according to a program memorized in a portable recording medium such as a CD, a DVD, a CF card, or a USB memory, or an external memory medium such as a server on the Internet.

The terminal memory 22 is a storage device including a computer-readable non-transitory storage medium. The terminal memory 22 includes a RAM which is a system work memory for a processor to operate, and a memory device such as a ROM, an HDD, or an SSD in which a program and system software are stored. The processor can execute various processing operations such as calculation, control, and determination according to a control program memorized in the ROM or the HDD. Incidentally, the terminal memory 22 may hold all the data in one memory device, or may memorize the data in a plurality of memory devices in a distributed manner.

The game terminal 70 includes a game terminal control unit, a game terminal memory, a game operation unit, a game display unit, and a communication unit (not illustrated). The game terminal memory memorizes a control program of the game terminal 70 and a game program. The game terminal control unit controls the game terminal 70 and executes the game program to allow a player to play a game.

The game operation unit is an operation device such as a controller or a touch panel, and receives an input by a player's game operation. The game operation unit and the game display unit may be integrally configured as a display operation unit such as a touch panel. Furthermore, the game terminal 70 may include a camera that photographs a player or the like. In this case, the game terminal 70 can transmits a camera video photographed by the camera to the distribution server 30 together with a game screen. Alternatively, the camera may be disposed separately from the game terminal 70. In this case, the camera may transmit the camera video to the distribution server 30.

The game display unit is a display device such as a display or a touch panel, and displays a game screen of a game played by a player. The game operation unit and the game display unit may be integrated with or separated from the game terminal 70. Furthermore, the game terminal 70 includes a voice output device (not illustrated).

Incidentally, the game terminal control unit controls progress of a game by executing a game program, but may control the progress of the game in cooperation with the game control unit of the game server 60. For example, the game control unit may control progress of at least a part of the game, and the game terminal control unit may display a result thereof on the game display unit. In addition, the game control unit collects play data from the game terminal 70 and manages the collected play data. Furthermore, the game control unit may collect a game video, game operation information for reconstructing the game video, or the like from the game terminal 70.

### [Distribution server]

The distribution control unit 31 of the distribution server 30 includes a reception unit 31A as an example of a reception means, a grouping unit 31B as an example of a grouping means, a generation unit 31C as an example of a generation means, and a distribution unit 31D as an example of a distribution means. Furthermore, the grouping unit 31B includes a storage unit 31E as an example of a storage means, an extraction unit 31F as an example of an extraction means, a calculation unit 31G as an example of a calculation means, and an analysis unit 31H as an example of an analysis means. Each of these units is a logical device implemented by a combination of a hardware resource of the distribution control unit 31 and a control program PG as a software resource.

The reception unit 31A receives the posting operation of the comment for the moving image from each of the plurality of user terminals 20. For example, the reception unit 31A receives the posting operation of the comment performed by a viewer during live distribution, archive distribution, or on-demand distribution. Specifically, the reception unit 31A acquires input information indicating a content of the comment and the like and the terminal ID or the user ID from the user terminal 20. The storage unit 31E causes the distribution memory 32 to memorize comment information D4 indicating the content of the comment while the comment information D4 is included in the posting history information D2. As a result, the storage unit 31E stores the posting history information D2. For example, the storage unit 31E associates input information (for example, a character string of "do your best") with the user ID, and causes the distribution memory 32 to memorize the associated information as the comment information D4.

Furthermore, the reception unit 31A may receive, as a user operation, an operation such as changing a reproduction speed of the moving image, changing the size of the moving image area VA, and starting or stopping reproduction. As an example, a viewer can execute each operation by selecting an icon or the like disposed to overlap or side by side with the moving image area VA on a distribution screen.

The storage unit 31E stores the posting history information D2 including information indicating a posting tendency of the comment so as to be distinguishable for each user terminal 20. For example, the storage unit 31E causes the distribution memory 32 to memorize the posting history information D2 while the posting history information D2 is included in the history information D1 associated with the terminal ID or the user ID. As a result, the storage unit 31E stores the posting history information D2. As an example, the information indicating the posting tendency includes the number of posts, a posting frequency, an attribute of a comment, a content of the comment, and the like by the posting operation via each user terminal 20. Incidentally, the history information D1 is stored for each user or for each user terminal 20.

When the information indicating the posting tendency is distinguished for each user terminal 20 by being associated with the terminal ID, the posting tendency that varies depending on the type of the user terminal 20 can be reflected in grouping. For example, when the number of posts is small when viewing is performed from a smartphone and the number of posts is large when viewing is performed from a personal computer, the posting tendency can be reflected in grouping. When the information indicating the posting tendency is distinguished for each user terminal 20 by being associated with the user ID, the posting tendency that varies depending on a user can be reflected in grouping.

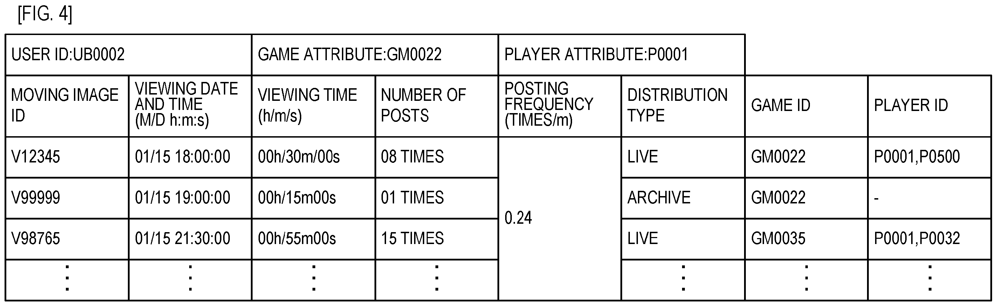

In the history information D1 illustrated in FIG. 4, the number of posts and a posting frequency are included in the posting history information D2 as the information indicating the posting tendency. Here, the number of posts is the number of comments posted within a viewing time. The posting frequency is the number of comments posted on the moving image specified by the moving image ID per unit time. For example, when 24 comments are posted in the total viewing time of one hundred minutes, a posting frequency 0.24 is calculated by dividing "24" by "100". Incidentally, the unit time may be longer or shorter than one minute instead of one minute. Furthermore, instead of or in addition to the number of posts per unit time, the number of comments per number of viewing times may be included in the posting history information D2. For example, when eight comments are posted in one viewing, a posting frequency 8 is calculated by dividing "8" by "1".

The posting history information D2 includes the number of posts per unit time for each user terminal 20 as the information indicating a posting tendency. For example, the posting history information D2 includes a posting frequency (FIG. 4) as the number of posts per unit time in the total viewing time of all the moving images. As a result, grouping can be performed such that the number of posts for each group is an appropriate number based on the number of posts estimated from the posting tendency. Alternatively, the posting history information D2 may include the number of posts per unit time in a viewing time for each moving image as the posting frequency. Alternatively, the posting history information D2 may include the number of posts per unit time in a predetermined time (for example, the past one year or the past one month) as the information indicating the posting tendency.

The moving image ID is an example of moving image identification information for uniquely identifying a viewed moving image, and the viewed moving image can be specified by the moving image ID. A viewing date and time indicates a date and time when viewing of the moving image specified by the moving image ID is started. In the example of FIG. 4, the viewing date and time is specified by month, day, hour, minute, and second, but the viewing date and time may be further specified by year. The viewing time indicates a length of time for viewing the moving image specified by the moving image ID. In the example of FIG. 4, the viewing time is specified by hour, minute, and second, but the viewing time may be specified by only hour or minute. Incidentally, when the same moving image is viewed a plurality of times, a maximum viewing time may be defined as the viewing time, or the total viewing time may be defined as the viewing time.

The number of posts illustrated in FIG. 4 indicates the number of comments posted on the moving image specified by the moving image ID. Incidentally, the comment includes a character string or an image, and for example, the image is an icon image representing support or impression. The distribution type indicates a distribution format such as live distribution or archive distribution, and indicates that the moving image is viewed during the live distribution or the archive distribution. In the example of FIG. 4, only live distribution or archive distribution is illustrated, but on-demand distribution may be further included in the distribution type.

The grouping unit 31B performs grouping such that each user terminal 20 belongs to at least one of a plurality of groups based on the posting history information D2. For example, the grouping unit 31B performs grouping such that a group posting frequency or a total posting amount described later falls within a predetermined range. Specifically, the grouping unit 31B groups the user terminals 20 of viewers who are viewing the moving image based on the posting history information D2. As a result, grouping can be performed such that the number of posts for each group is an appropriate number based on the number of posts estimated from the posting tendency. The generation unit 31C generates the distribution data so as to display the comment posted from the user terminal 20 belonging to each group for each divided group.

The viewer includes a viewer who posts a large number of comments and a viewer who posts a small number of comments or does not post a comment. Therefore, in a group including viewers who post a large number of comments, even if the comment posted in the group is displayed, the comment disappears from the comment area CA in a short time. Therefore, the grouping unit 31B performs grouping such that a group posting frequency or the total posting amount for comments from the user terminals 20 belonging to the group falls within a predetermined range based on the past posting history information D2 (for example, the posting frequency).

As an example, the predetermined range of the group posting frequency is a range of 0 to 5, a range of 0 to 50, or a range of 0 to 100. As the predetermined range of the total posting amount, the total number of posts of comments in a predetermined time is in a range of 0 to 3000 or in a range of 0 to 6000. The predetermined time is, for example, an arbitrary time such as one hour, a time corresponding to the length of the moving image, a time corresponding to the length of distribution, or a time of an arbitrary length before and after the maximum number of posts is reached (for example, ten minutes). Incidentally, as the total posting amount, the total number of characters of comments posted within a predetermined time may be used instead of the total number of posts within the predetermined time.

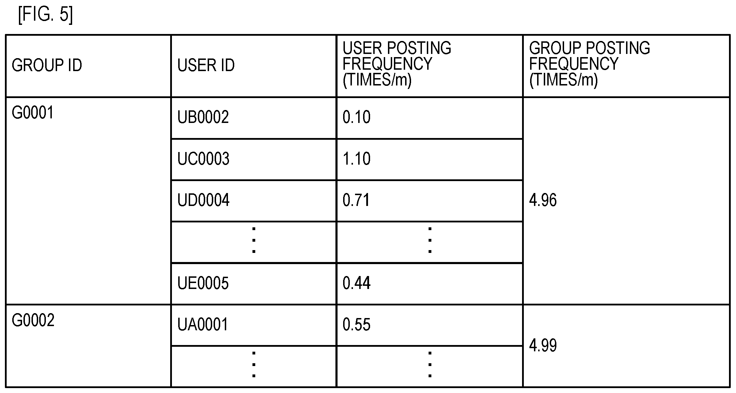

Specifically, the grouping unit 31B creates group identification information (hereinafter, also referred to as a group ID) for uniquely identifying a group. The grouping unit 31B causes the distribution memory 32 to memorize the terminal IDs of the user terminals 20 belonging to each group in association with the group ID. For example, in the example of FIG. 5, the user terminals 20 used by viewers identified by user IDs "UB0002", "UC0003", "UD0004", and "UE0005" belong to a group identified by a group ID "G0001".

Incidentally, in FIG. 5, the group ID is information for uniquely identifying a group to which the user terminal 20 belongs. In addition, the user ID is information for uniquely identifying a user who uses the user terminal 20. Furthermore, the user posting frequency is calculated based on the posting history information D2, and indicates a comment posting frequency of a viewer specified by the user ID. The group posting frequency indicates the total number of posts per unit time by the user terminals 20 used by all viewers of the group identified by the group ID.

For example, a user posting frequency of a viewer identified by a user ID "UB0002" is 0.10. The group posting frequency, which is the total number of posts per unit time of the user terminals 20 used by all viewers of the group identified by the group ID "G0001", is calculated by adding the user posting frequencies of all viewers of the group. In the example of FIG. 5, the group posting frequency of the group identified by the group ID "G0001" is 4.96.

The user posting frequency of a viewer identified by a user ID "UA0001" is 0.55. Therefore, the grouping unit 31B groups the user terminal 20 used by the viewer identified by the user ID "UA0001" into another group so as not to exceed the range of 0 to 5 which is the predetermined range of the group posting frequency. That is, in the example of FIG. 5, the grouping unit 31B puts the user terminal 20 into a group identified by a group ID "G0002".

In addition, the grouping unit 31B may perform grouping by acquiring the number of posts per unit time for each user terminal 20 in a predetermined range of time (for example, for the past one year or the past one month, spring, summer, autumn, or winter) from the posting history information D2. As a result, a fluctuation in the posting tendency according to the period for each viewer can be reflected in grouping. In this case, the grouping unit 31B may perform grouping by acquiring the number of posts per unit time in a time period such as daytime or nighttime from the posting history information D2 as the time in the predetermined range. Thus, for example, in a case of viewing the moving image distributed at night, grouping can be performed based on a posting tendency at night. Therefore, grouping can be performed based on the posting tendency according to the viewing period or the viewing time.

In addition, the grouping unit 31B may perform grouping such that a reply user terminal 20 that has posted a reply comment with respect to a posted comment and a posted user terminal 20 that has posted the comment that is a target of the reply comment belong to the same group. In this case, the reception unit 31A further receives a posting operation of the reply comment with respect to the comment. As a result, viewers who make reply comments belong to the same group, and can enjoy viewing the moving image while browsing the comments of the viewers. Furthermore, when bidirectional communication using a reply comment is repeated, grouping can be performed such that exchange of comments is displayed.

Conversely, when the reply comment with respect to the posted comment includes a negative content, the grouping unit 31B may perform grouping such that a user terminal 20 that has posted the comment and a user terminal 20 that has posted the reply comment belong to different groups. For example, the analysis unit 31H analyzes the content of the reply comment, and if a character string such as "noisy " is included, the analysis unit 31H puts a comment attribute ID indicating a negative attribute in an analysis result. The storage unit 31E causes the distribution memory 32 to memorize the comment attribute ID associated with the user ID of the viewer who has posted the posted comment while the comment attribute ID is included in the posting history information D2. The grouping unit 31B performs grouping based on the comment attribute ID indicating a negative attribute included in the posting history information D2.

In addition, the grouping unit 31B may perform the grouping at an arbitrary timing. For example, the grouping unit 31B performs the grouping at a timing when distribution is started or a timing when a predetermined time (for example, ten minutes) has elapsed since the distribution was started. Furthermore, the grouping unit 31B may perform the grouping when the number of viewers reaches a predetermined number (for example, 1000).

In addition, the grouping unit 31B may perform grouping when the reception unit 31A receives a viewing request of the moving image from the user terminal 20. For example, the grouping unit 31B puts a viewer who uses the user terminal 20 into a group in the order of receiving the viewing request. In this case, when the group posting frequency or the total posting amount for comments in the group exceeds the predetermined range, the grouping unit 31B creates a new group when thereafter receiving the viewing request from the user terminal 20. Then, the grouping unit 31B puts the viewer who uses the user terminal 20 into a new group.

Furthermore, the grouping unit 31B may perform the grouping based on the posting history information D2 of the comment with respect to a currently viewed moving image instead of the posting history information D2 of the past comment. For example, the grouping unit 31B acquires the number of posts per unit time for each user terminal 20 for a predetermined sampling time (for example, ten minutes from start of distribution of the moving image) from start of distribution of the moving image. The grouping unit 31B performs the grouping such that each user terminal 20 belongs to at least one group during distribution of the moving image.

For example, the grouping unit 31B performs the grouping based on the acquired user posting frequency at a timing when the sampling time has elapsed. In this case, the storage unit 31E causes the distribution memory 32 to memorize the posting frequency calculated by the calculation unit 31G for the sampling time while the posting frequency is included in the posting history information D2. As a result, a change in the posting frequency according to a current viewing environment (for example, an environment in which posting is difficult, such as in a train, or an environment in which posting is easy, such as at home) can be reflected in the grouping. Furthermore, the grouping can be performed such that the number of posts for each group is an appropriate number for each moving image being viewed. Therefore, a fluctuation in the posting tendency due to a difference in a content of the moving image can be reflected in the grouping.

As another example, the grouping unit 31B may dynamically perform the grouping. For example, the grouping unit 31B may perform the grouping when the total number of posts per unit time or the total number of posts within a predetermined time of comments from the plurality of user terminals 20 (for example, the user terminals 20 of all viewers who are viewing the moving image) exceeds a predetermined range during distribution of the moving image. Specifically, the grouping unit 31B monitors the number of posts of the comments during distribution of the moving image. Then, the grouping unit 31B performs the grouping when the total number of posts per unit time exceeds the predetermined range (for example, a range of 0 to 5 times per minute). Alternatively, the grouping unit 31B performs the grouping when the total number of posts for a predetermined time (for example, ten minutes) exceeds a predetermined range (for example, a range of 0 to 300 times).

As a result, groups can be dynamically created during distribution of the moving image, and the grouping can be performed such that the number of posts for each group is an appropriate number. During live distribution, it is difficult to predict an increase or decrease in the number of viewers, and an operation of temporarily stopping reproduction of the moving image or the like is less likely to be performed. Therefore, it is more difficult to confirm a comment. Therefore, by dynamically creating a group particularly during live distribution, a viewer can easily confirm a content of the displayed comment.

The grouping unit 31B may perform the grouping based on the posting history information D2 of the comment posted on the moving image which has been live-distributed. For example, the grouping unit 31B refers to the number of posts per unit time of the comments of the moving image including "live" (FIG. 4) as the distribution type from the posting history information D2. Then, the calculation unit 31G calculates the group posting frequency or the total posting amount only for live distribution. Then, the grouping unit 31B performs the grouping such that the group posting frequency or the total posting amount falls within a predetermined range. Generally, the comments are often posted during live distribution. Therefore, the posting frequency during live distribution can be calculated more accurately except for information other than the live distribution. As a result, the grouping reflecting the posting tendency during live distribution can be performed.

Furthermore, the grouping unit 31B may perform the grouping again when the group posting frequency or the total posting amount of at least one group falls within a predetermined range after the grouping and during distribution of the moving image. As a result, a viewer belonging to a group with a small group posting frequency or a small total posting amount belongs to another group. Therefore, when the number of viewers or the number of posts decreases during distribution of the moving image, the grouping can be performed such that the number of posts for each group is an appropriate number.

In addition, the grouping unit 31B may perform the grouping such that the number of the plurality of groups is a predetermined number. As a result, when the number of viewers can be predicted in advance, the grouping into an appropriate number of groups can be performed. For example, when the number of viewers can be predicted in advance, a distributor or an administrator of the distribution server 30 may predict the number of groups in advance and set the number before start of distribution. Then, the grouping unit 31B dynamically performs the grouping such that the group posting frequency or the total posting amount falls within a predetermined range after start of distribution. Incidentally, the grouping unit 31B may perform the grouping such that the number of groups after the grouping is equal to or less than a predetermined number. Alternatively, the grouping unit 31B may perform the grouping such that the number of groups after the grouping is a predetermined number all the time.

In addition, the grouping unit 31B may perform the grouping into a group to which a viewer with a high posting frequency belongs and a group to which a viewer with a low posting frequency belongs. This makes it easy to confirm a content of the displayed comment in at least the group to which the viewer with the low posting frequency belongs. Incidentally, the viewer with the high posting frequency is accustomed to posting the comment. Therefore, it is less difficult for the viewer with the high posting frequency to confirm the content of the displayed comment. For this reason, a viewer belonging to the group consisting of the viewer with the high posting frequency is less likely to reduce willingness to post the comment and willingness to view the moving image.

The extraction unit 31F extracts the comment posted from the user terminals 20 for each belonging group as a group comment. For example, the extraction unit 31F extracts the comment associated with the user ID of a viewer who uses the user terminal 20 belonging to a group identified by the group ID from the comment information D4. The generation unit 31C generates the distribution data so as to display the comment extracted by the extraction unit 31F as the group comment for each divided group.

The generation unit 31C generates the distribution data so as to display group comment areas GA1 and GA2 that display the group comment. Then, the distribution unit 31D distributes the distribution data generated by the generation unit 31C to each user terminal 20. For example, the generation unit 31C generates the distribution data for displaying a distribution screen obtained by combining the moving image area VA in which a game video as the moving image is displayed and the comment area CA. Specifically, the generation unit 31C acquires data of a screen configuration memorized by the distribution memory 32, and generates the distribution data for displaying the distribution screen displayed simultaneously with the game video.

The distribution screen is generated as an image or a video. For example, the generation unit 31C generates the moving image for distribution in various formats such as an MPEG format. As an example, the generation unit 31C superimposes an upper layer including the comment area CA on a lower layer including the moving image area VA of a game video. The upper layer is configured as a transparent image so as not to disturb display of the game video. The comment area CA and the like are displayed in the upper layer at a timing of displaying each comment. For example, when the comment is posted, a content of the posted comment is displayed in the comment area CA of the upper layer.

As an example, FIG. 2 illustrates a distribution screen displayed by the display unit 24 of the user terminal 20 based on the distribution data. The distribution screen includes the moving image area VA and the comment area CA. Furthermore, the comment area CA includes the group comment areas GA1 and GA2. In the group comment area GA1, the comment posted from the user terminal 20 belonging to a group identified by a group ID "G0002" is displayed. In the group comment area GA2, the comment posted from the user terminal 20 belonging to a group identified by a group ID "G0001" is displayed.

A viewer selects the group comment areas GA1 and GA2 of the group to which the viewer belongs on the distribution screen. Specifically, in the example of FIG. 2, the group comment area GA2 is selected. Therefore, the size of the group comment area GA1 is reduced, and the group comment of the group to which the viewer belongs is displayed in a wide range on the distribution screen. As a result, the grouping is performed such that each user terminal 20 belongs to at least one of a plurality of groups, and the comment can be displayed for each of the groups. In this way, since the comment is displayed for each group, visibility of the comment is improved. As a result, it is easy for the viewer to confirm a content of the displayed comment, and reduction of willingness to post the comment and willingness to view the moving image can be suppressed. Furthermore, since the number of posts of the comments can be adjusted to an appropriate number for each group based on a posting tendency, the number of the displayed comments can be adjusted to an appropriate number. In addition, since the grouping is not limited to the grouping based on information input by the viewer, the degree of freedom in the grouping can be increased.

Here, the generation unit 31C may put all the comments posted from all the user terminals 20 belonging to all the groups in the distribution data. In addition, the generation unit 31C may generate the distribution data such that only the group comment of a group to which the user terminal 20 belongs is displayed on this user terminal 20. Specifically, the generation unit 31C may put, in the distribution data distributed to each user terminal 20, only the group comment of the group to which this user terminal 20 belongs. As a result, on the user terminal 20 of each viewer, only the group comment of the group to which this viewer belongs is displayed.

Alternatively, the generation unit 31C may generate the distribution data such that a display mode in which only the group comment is displayed and a display mode in which all the comments are displayed can be switched. Furthermore, the generation unit 31C may generate the distribution data such that a display mode in which only the group comment of the group to which the viewer belongs is displayed and a display mode in which the group comment of the group to which the viewer belongs and the group comment of another group are displayed can be switched.

Furthermore, when the grouping is performed during distribution of the moving image, the generation unit 31C may generate the distribution data such that the group comment displayed before the grouping is displayed in the group comment areas GA1 and GA2 even after the grouping. Conversely, the generation unit 31C may generate the distribution data such that the group comment displayed before the grouping is not displayed in the group comment areas GA1 and GA2. In addition, when the comments of viewers belonging to the same group after the grouping are displayed before the grouping, the generation unit 31C may generate the distribution data such that these comments are displayed in the group comment areas GA1 and GA2 even after the grouping.

The calculation unit 31G calculates the number of posts per unit time for each user terminal 20. The storage unit 31E causes the distribution memory 32 to memorize the calculation result (for example, the posting frequency of a user) while the calculation result is included in the posting history information D2. As a result, the storage unit 31E stores the posting history information D2. Alternatively, the storage unit 31E updates the posting frequency of the user included in the posting history information D2. In addition, the calculation unit 31G calculates the total number of posts per unit time of the plurality of user terminals 20 included in the group as the group posting frequency. Alternatively, the calculation unit 31G calculates the total number of posts within a predetermined time of the plurality of user terminals 20 included in the group as the total posting amount. The storage unit 31E causes the distribution memory 32 to memorize the calculation result (for example, a group posting frequency) while the calculation result is included in the posting history information D2. As a result, the storage unit 31E stores the posting history information D2.

In addition, the calculation unit 31G may calculate the number of posts per unit time for each user terminal 20 for a predetermined sampling time from start of distribution of the moving image. Furthermore, the calculation unit 31G may calculate the number of posts per unit time for each user terminal 20 in a time in a predetermined range. The storage unit 31E causes the distribution memory 32 to memorize the calculation result while the calculation result is included in the posting history information D2. As a result, the storage unit 31E stores the posting history information D2.

The analysis unit 31H analyzes the comment and decides a comment attribute of the comment. Then, the storage unit 31E causes the distribution memory 32 to memorize not illustrated attribute information (for example, a comment attribute ID) indicating the comment attribute while the attribute information is included in the posting history information D2 based on the analysis result, whereby the storage unit 31E stores the posting history information D2. For example, the analysis unit 31H analyzes a sentence included in a comment, and if a character meaning expectation or support such as "do your best" is included in the comment, the analysis unit 31H puts the comment attribute ID indicating a positive property in an analysis result. If a character meaning a yarn or a bushing is included in the comment, the analysis unit 31H put the comment attribute ID indicating a negative property in an analysis result. If only a character that cannot be classified into positive or negative is included in the comment, the analysis unit 31H puts the comment attribute ID indicating a neutral property in an analysis result.

Furthermore, if a character that can specify a player, such as a name of a player of a game, is included in the comment, the analysis unit 31H may put the comment attribute ID indicating the player in an analysis result. In addition, if a character that can specify a game, such as a title of a game, is included in the comment, the analysis unit 31H may put the comment attribute ID indicating the game in an analysis result.

The grouping unit 31B performs the grouping such that the user terminals 20 associated with the same comment attribute belong to the same group. For example, the grouping unit 31B refers to the posting history information D2 and searches for user IDs associated with the same comment attribute. Then, the grouping unit 31B performs the grouping such that the user terminals 20 of viewers specified by the user IDs obtained by the search belong to the same group. As a result, the grouping unit 31B can perform the grouping based on a tendency of contents of the comments of viewers. Therefore, the grouping unit 31B can perform the grouping such that the comments having close contents are displayed. Furthermore, the grouping unit 31B can perform the grouping into a group of viewers who are fans and a group of viewers who are anti-fans.

Alternatively, the grouping unit 31B may perform the grouping such that the user terminals 20 associated with the same user attribute belong to the same group. The attribute information indicating the user attribute is, for example, a user attribute ID. The storage unit 31E refers to user information memorized by the distribution memory 32 or the game memory of the game server 60, and puts the user attribute ID in the history information D1. For example, the user attribute ID indicates a gender or an age of a viewer. The storage unit 31E specifies the gender or the age from the user information corresponding to the user ID. Then, the storage unit 31E causes the distribution memory 32 to memorize the history information D1 so as to include the user attribute ID indicating the specified gender or age.

The distribution unit 31D distributes the distribution data generated by the generation unit 31C to the plurality of user terminals 20. As an example, the distribution unit 31D displays a distribution screen on a Web page accessed by a viewer. In this case, the viewer may input a user operation by operating an input area of the distribution screen, an operation icon, and the like. Alternatively, the viewer may input the user operation by operating such as an input area and an operation icon displayed by an application program of the user terminal 20.

Furthermore, the distribution control unit 31 may include a consideration reception unit (not illustrated). The consideration reception unit determines that payment of consideration occurs when the reception unit 31A receives an input by a user operation corresponding to contribution or provision of reward from the user terminal 20. Then, the consideration reception unit displays a consideration payment screen (not illustrated) for the user operation on the display unit 24 of the user terminal 20. The viewer selects a displayed amount of reward via the payment screen. Then, the user terminal 20 transmits payment information including unique charge target information for identifying the selected user operation to a settlement server (not illustrated).

The settlement server performs settlement processing of consuming charge target consideration corresponding to the charge target information, and transmits a result of the settlement processing to the user terminal 20. Incidentally, the consideration reception unit may display a link icon of a Web page provided by the settlement server on the display unit 24. When a user touches the link icon, the Web page provided by the settlement server is displayed, and the settlement processing is performed via the Web page. The user can pay consideration by using, in addition to money, a card medium such as a credit card or a debit card, or by consuming a consumption medium such as substitute currency, virtual currency, encrypted assets, electronic money, or points.

### [Flow of grouping by distribution system]

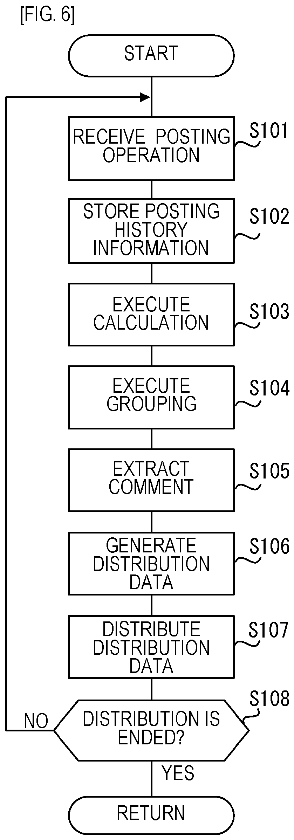

A grouping processing flow by the distribution system 100 will be described with reference to FIG. 6. The distribution system 100 starts processing when a predetermined start condition is satisfied. For example, in a case of live distribution, the distribution system 100 starts processing when acquiring a game video. Then, when acquiring the game video, the generation unit 31C generates the distribution data including the game video. Subsequently, the distribution unit 31D distributes the distribution data including the game video to the user terminal 20. As a result, the user terminal 20 displays a distribution screen including the game video on the display unit 24.

Then, when a viewer who is viewing the moving image performs the posting operation of a comment from the user terminal 20, the reception unit 31A receives a post by the posting operation (S101). Then, the storage unit 31E stores the posting history information D2 including information indicating the posting tendency of the comment (S102). The calculation unit 31G refers to the current and past posting history information D2 and calculates the total number of posts per unit time of the user terminals 20 included in the group as the group posting frequency (S103).

Then, the grouping unit 31B performs the grouping such that the group posting frequency or the total posting amount falls within a predetermined range (S104). Thereafter, the extraction unit 31F extracts the comments posted from the user terminals 20 for each group as the group comment (S105). Subsequently, the generation unit 31C generates the distribution data for displaying the group comment areas GA1 and GA2 that display the group comment (S106). Thereafter, the distribution unit 31D distributes the distribution data including the game video and the group comment to the user terminals 20 (S107). Then, the user terminals 20 display the distribution screen including the game video and the group comment on the display unit 24.

Thereafter, when the distribution is ended due to, for example, a reason that the game video is reproduced to the end (YES in S108), the distribution system 100 ends the processing. On the other hand, when the distribution is continued (NO in S108), the distribution unit 31D continues the reception of the posting operation (S101).

According to the first embodiment described above, the grouping is performed such that each user terminal 20 belongs to at least one of a plurality of groups. Therefore, since the comment can be displayed for each group, visibility of the comment is improved. As a result, it is easy for the viewer to confirm a content of the displayed comment, and reduction of willingness to post the comment and willingness to view the moving image can be suppressed. Furthermore, since the number of posts of the comments can be adjusted to an appropriate number for each group based on the posting tendency, the number of the displayed comments can be adjusted to an appropriate number. In addition, since the grouping is not limited to grouping based on information input by the viewer, the degree of freedom in the grouping can be increased.

### [Second Embodiment]

Subsequently, a second embodiment will be described. In the second embodiment, the grouping unit 31B performs grouping based on viewing history information D3. Incidentally, in the description of the second embodiment, differences from the first embodiment will be mainly described. The already described components are denoted by the same reference signs, and description thereof will be omitted. Unless otherwise described, the components denoted by the same reference signs exhibit substantially the same operation and function, and functions and effects thereof are also substantially the same.

Incidentally, the grouping unit 31B may perform only the grouping based on the viewing history information D3 if the grouping based on the posting history information D2 of the first embodiment is unnecessary. For example, when the number of viewers is small, the grouping unit 31B may perform only the grouping based on the viewing history information D3. In addition, the grouping unit 31B may perform only the grouping based on the posting history information D2 if the grouping based on the viewing history information D3 is unnecessary.

Furthermore, the grouping unit 31B may perform both of the grouping based on the posting history information D2 and the grouping based on the viewing history information D3. In this case, the grouping unit 31B performs pre-grouping on the plurality of user terminals 20 such that each of the user terminals 20 belongs to at least one of a plurality of groups based on the viewing history information D3. Thereafter, the grouping unit 31B newly performs the grouping such that each user terminal belongs to at least one of a plurality of groups based on the posting history information D2. For example, the grouping unit 31B performs the grouping based on the posting history information D2 when the number of viewers increases.

In the following description, the grouping based on the viewing history information D3 will be mainly described. Note that the grouping unit 31B can perform the grouping based on the viewing history information D3 as the pre-grouping. Alternatively, when the group posting frequency or the total posting amount falls within a predetermined range, the grouping unit 31B can perform the grouping based on the viewing history information D3 as grouping during distribution of the moving image.

A control system of a distribution system 100 according to the second embodiment will be described with reference to FIG. 3. A storage unit 31E of a distribution server 30 stores the viewing history information D3 including information indicating a moving image viewing tendency so as to be distinguishable for each user terminal 20. For example, the storage unit 31E causes a distribution memory 32 to memorize the viewing history information D3 while the viewing history information D3 is included in the history information D1 associated with a terminal ID or a user ID. As a result, the storage unit 31E stores the viewing history information D3. Incidentally, the history information D1 is stored for each user or for each user terminal 20. As an example, the viewing history information D3 includes information indicating an attribute of the moving image viewed on the user terminal 20 as information indicating a viewing tendency. As a result, a content of the moving image viewed in the past is reflected in the grouping, and the comment appropriate for the viewer tends to be displayed.

In the history information D1 illustrated in FIG. 4, as the information indicating the viewing tendency, a game attribute indicating a game which is an example of an attribute of the moving image and a player attribute indicating a player who fights a battle type game are included in the viewing history information D3. Specifically, a game ID is an example of the game attribute, and a player ID is an example of the player attribute. The reception unit 31A acquires attributes of the moving image, for example, the game attribute and the player attribute from a game terminal 70 or a game server 60 at the time of uploading the moving image (for example, a game video). When the viewer views the moving image, the storage unit 31E stores an attribute of the moving image associated with moving image identification information while the attribute is included in the viewing history information D3. Thereafter, the grouping unit 31B performs the grouping such that each user terminal 20 belongs to at least one of a plurality of groups based on the viewing history information D3.

Specifically, the game attribute indicates a specific game, and the game ID which is the game attribute is game identification information for uniquely identifying a game appearing in a game video as the moving image. Instead of or in addition to the game ID, a title of the game may be included in the viewing history information D3 as the game identification information. In addition, the player attribute indicates a player who fights a battle type game. The player ID which is the player attribute is player identification information for uniquely identifying a player who plays a game appearing in a game video as the moving image. In addition to or in place of the player ID, a name of the player may be included in the viewing history information D3 as the player identification information. Incidentally, the player ID may be a player ID (for example, an ID imparted by the game server 60) set in the game or a player ID set by the game terminal 70.

When transmitting the game video to the distribution server 30, the game terminal 70 or the game server 60 transmits at least one of the game ID and the player ID together with the game video. Then, the reception unit 31A receives the game ID and the player ID as the attributes of the moving image. Furthermore, the storage unit 31E stores the game ID and the player ID by causing the distribution memory 32 to memorize the game ID and the player ID in association with the game video. Thereafter, when the viewer views the game video, the storage unit 31E stores the game ID and the player ID associated with the game video while the game ID and the player ID are included in the viewing history information D3. As a result, the distribution server 30 can acquire the player attribute and the game attribute that are difficult to acquire.

Alternatively, a distributor may input the game ID of a game or the player ID of a player appearing in the game video. The reception unit 31A receives the input game ID or player ID as the attribute of the moving image. Then, the storage unit 31E stores the game ID or the player ID by causing the distribution memory 32 to memorize the game ID or the player ID in association with the game video. Furthermore, the analysis unit 31H may specify a game or a player from a title or description of the moving image to be distributed. The storage unit 31E refers to an analysis result by the analysis unit 31H, and stores the game ID or the player ID by causing the distribution memory 32 to memorize the game ID or the player ID in association with the game video.

The storage unit 31E stores the game identification information associated with the moving image identification information of the plurality of moving images viewed on each user terminal 20 while the game identification information is included in the viewing history information D3 as the game attribute. For example, in the example of FIG. 4, a game ID "GM0022" associated with the moving image identification information of the plurality of moving images is included in the viewing history information D3 as the game attribute.

Specifically, the storage unit 31E estimates a game ID associated with a plurality of moving images as a game attribute from the game IDs of the viewing history information D3. A viewer often has a favorite game and tends to view more game videos of the game. Therefore, a plurality of game IDs included in the viewing history information D3 corresponds to the game ID of the game in which the viewer is interested. Using this, the game in which the viewer is interested is specified. When a viewer who views the game video belongs to the same group as a viewer whose interested game is common, the viewers can communicate with each other by the comments posted by the viewers. As a result, the viewer can view the moving image more enjoyable.

For example, when there are a certain number or more (for example, two) game IDs in the viewing history information D3, the storage unit 31E stores the game ID as the game attribute of the viewer while the game ID is included in the viewing history information D3. Alternatively, the storage unit 31E may store a game ID having a larger number of times of being associated with the viewed moving image than other game IDs included in the viewing history information D3 as the game attribute of the viewer while the game ID is included in the viewing history information D3. Furthermore, the storage unit 31E may store a game ID corresponding to the moving image whose viewing time included in the viewing history information D3 exceeds a predetermined time as the game attribute of the viewer while the game ID is included in the viewing history information D3. Incidentally, the game in which the viewer is interested is not limited to one game. Therefore, the storage unit 31E may store a plurality of game IDs as a game attribute of one viewer while the game IDs are included in the viewing history information D3.

The grouping unit 31B performs the grouping such that the user terminals 20 associated with the same game attribute belong to the same group. As a result, viewers whose interested game is common belong to the same group. Therefore, the viewers can communicate with each other by the posted comments and enjoy viewing the moving image more. Furthermore, the grouping unit 31B may group viewers having a similar number of game attributes included in the viewing history information D3. For example, the grouping unit 31B counts the number of game attributes in the viewing history information D3 associated with one user ID. Then, the grouping unit 31B performs the grouping such that a group in which the number of game attributes included in the viewing history information D3 is 0 to 5, a group in which the number of game attributes included in the viewing history information D3 is 6 to 20, and a group in which the number of game attributes included in the viewing history information D3 is more than 20 are provided.

If there is a certain number or more of game IDs in the viewing history information D3, the viewer frequently views a specific game video. Therefore, it can be said that the viewer is proficient or has deep knowledge in a game appearing in the game video that is frequently viewed. As a result, it is possible to provide a group of viewers having a high proficiency level with respect to a game and a group of viewers having a low proficiency level with respect to the game. For example, the grouping unit 31B performs the grouping such that the user terminals 20 having no common game attribute in the viewing history information D3 belong to the same group. As a result, a group of viewers having a low proficiency level can be provided, and the comment suitable for the viewer can tend to be displayed. Therefore, the comment including a term with higher expertise tends to be displayed for a viewer having a high proficiency level. Then, the comment including a more basic term tends to be displayed for a viewer having a low proficiency level. As a result, a content of the comment is more appropriate for the viewer.

The storage unit 31E stores player identification information associated with the moving image identification information of the plurality of moving images viewed on each user terminal 20 as a player attribute. For example, in the example of FIG. 4, a player ID "P0001" associated with the moving image identification information of the plurality of moving images is included in the viewing history information D3 as a player attribute.

Specifically, the storage unit 31E estimates a player ID associated with a plurality of moving images as a player attribute from the player IDs of the viewing history information D3. The viewer often has a player supported by the viewer, and the viewer tends to view a game video of a game played by this player more frequently. Therefore, the plurality of player IDs included in the viewing history information D3 corresponds to the player ID of the player supported by the viewer. Using this, a player supported by the viewer is specified. When a viewer who views the game video belongs to the same group as a viewer whose supported player is common, the viewers can communicate with each other by the comments posted by the viewers. As a result, the viewer can view the moving image more enjoyable.

For example, when there are a certain number or more (for example, two) player IDs in the viewing history information D3, the storage unit 31E stores the player ID as the player attribute of the viewer while the player ID is included in the viewing history information D3. Alternatively, the storage unit 31E may store a player ID having a larger number of times of being associated with the viewed moving image than other player IDs included in the viewing history information D3 as the player attribute of the viewer while the player ID is included in the viewing history information D3. Furthermore, the storage unit 31E may store a player ID corresponding to the moving image whose viewing time included in the viewing history information D3 exceeds a predetermined time as the player attribute of the viewer while the player ID is included in the viewing history information D3. Incidentally, the player supported by the viewer is not limited to one player. Therefore, the storage unit 31E may store a plurality of player IDs as the player attribute of one viewer while the player IDs are included in the viewing history information D3.

The grouping unit 31B performs the grouping such that the user terminals 20 associated with the same player attribute belong to the same group. As a result, viewers whose supported player is common belong to the same group. Therefore, the viewers can communicate with each other by the posted comments and enjoy viewing the moving image more. Furthermore, the grouping unit 31B may group viewers having a similar number of player attributes included in the viewing history information D3. For example, the grouping unit 31B counts the number of player attributes in the viewing history information D3 associated with one user ID. Then, the grouping unit 31B performs the grouping such that a group in which the number of player attributes included in the viewing history information D3 is 0 to 5, a group in which the number of player attributes included in the viewing history information D3 is 6 to 20, and a group in which the number of player attributes included in the viewing history information D3 is more than 20 are provided.

Furthermore, instead of or in addition to the player ID, a team ID for uniquely identifying a team consisting of a plurality of players may be included in the viewing history information D3. For example, when the viewer supports not each player but a team, as in a baseball game or a soccer game, the team ID as an attribute of the moving image can be effectively used. Furthermore, a distributor ID for uniquely identifying a distributor, a name of the distributor, or the like may be included in the viewing history information D3 as the attribute of the moving image.

Furthermore, a genre ID indicating a genre of the moving image may be included in the viewing history information D3 as the attribute of the moving image. For example, the genre of the moving images includes such as video blogs, variety shows, introductions or reviews of product or service, how-to, education, gaming commentary, music, makeup, fashion, cooking, comics, avatar distributors, gourmet, outdoor, pets, impact videos, vehicles, trends, pachinko, politics, and news.

In addition, the grouping unit 31B may perform the grouping based on the viewing history information D3 for a time in a predetermined range. For example, the time in the predetermined range is a time in a range of a predetermined number of times such as past ten times based on the current time. Alternatively, the time in the predetermined range is a time in a range such as in the past one week based on the current time. By limiting the viewing history information D3 to be referred to in this way, a change in the viewer's preference can be reflected in the grouping. As a result, a fluctuation in the viewing tendency according to a period for each viewer can be reflected in the grouping.

In addition, the grouping unit 31B may perform the grouping at an arbitrary timing. For example, the grouping unit 31B performs the grouping at a timing when distribution is started or when a predetermined time (for example, ten minutes) has elapsed since the distribution was started. Furthermore, the grouping unit 31B may perform the grouping when the number of viewers reaches a predetermined number (for example, 1000). In addition, the grouping unit 31B may perform the grouping when the reception unit 31A receives a moving image viewing request from the user terminal 20.

In addition, the grouping unit 31B may perform the grouping such that the number of the plurality of groups is a predetermined number. As a result, when the number of viewers can be predicted in advance, the grouping into an appropriate number of groups can be performed. For example, when the number of viewers can be predicted in advance, a distributor or an administrator of the distribution server 30 may predict the number of groups in advance and set the number before start of distribution. Incidentally, the grouping unit 31B may perform the grouping such that the number of groups after the grouping is equal to or less than a predetermined number. Alternatively, the grouping unit 31B may perform the grouping such that the number of groups after the grouping is a predetermined number all the time.

The extraction unit 31F extracts the comment posted from the user terminals 20 for each belonging group as the group comment. For example, the extraction unit 31F extracts the comment associated with the user ID of a viewer who uses the user terminal 20 belonging to a group identified by the group ID from the comment information D4. The generation unit 31C generates the distribution data so as to display the comment extracted by the extraction unit 31F as the group comment for each divided group.

That is, the generation unit 31C generates the distribution data so as to display the group comment areas GA1 and GA2 in which the group comment is displayed. Then, the distribution unit 31D distributes the distribution data generated by the generation unit 31C to each user terminal 20. As a result, it is possible to perform the grouping for each viewer group having a common interest estimated from the viewing tendency without the viewer performing a troublesome input operation. In addition, since the grouping is not limited to grouping based on information input by the viewer, the degree of freedom in the grouping can be increased.

### [Flow of grouping by distribution system]

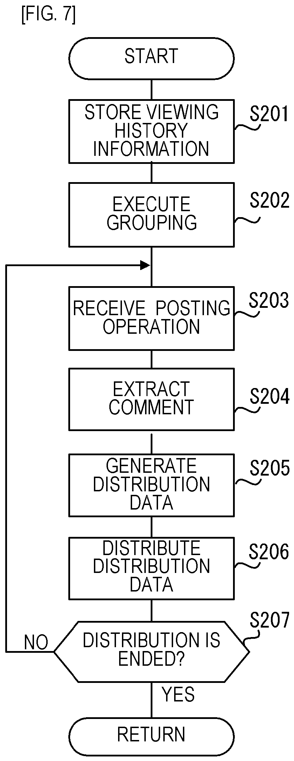

A grouping processing flow by the distribution system 100 will be described with reference to FIG. 7. The distribution system 100 starts processing when a predetermined start condition is satisfied. For example, in a case of live distribution, the distribution system 100 starts processing when acquiring a game video. Then, when acquiring the game video, the generation unit 31C generates the distribution data including the game video. In addition, when the reception unit 31A receives a viewing request of the moving image from the user terminal 20, the storage unit 31E stores the viewing history information D3 including information indicating the viewing tendency of the moving image (S201). Subsequently, the distribution unit 31D distributes the distribution data including the game video to the user terminal 20. Then, the user terminal 20 displays the distribution screen including the game video on the display unit 24.

The grouping unit 31B performs the grouping such that the user terminals 20 associated with the same moving image attribute belong to the same group (S202). Then, when a viewer who is viewing the moving image performs the posting operation of the comment from the user terminal 20, the reception unit 31A receives a post by the posting operation (S203). Thereafter, the extraction unit 31F extracts the comments posted from the user terminals 20 for each group as the group comment (S204). Subsequently, the generation unit 31C generates the distribution data for displaying the group comment areas GA1 and GA2 that display the group comment (S205). Thereafter, the distribution unit 31D distributes the distribution data including the game video and the group comment to the user terminals 20 (S206). Then, the user terminals 20 display a distribution screen including the game video and the group comment on the display unit 24.

Thereafter, when the distribution is ended due to, for example, a reason that the game video is reproduced to the end (YES in S207), the distribution system 100 ends the processing. On the other hand, when the distribution is continued (NO in S207), the distribution unit 31D continues the reception of the posting operation (S203).

According to the second embodiment described above, the grouping is performed such that each user terminal 20 belongs to at least one of a plurality of groups. Therefore, since the comment can be displayed for each group, visibility of the comment is improved. As a result, it is easy for the viewer to confirm a content of the displayed comment, and reduction of the viewer's willingness to post the comment and the viewer's willingness to view the moving image can be suppressed. Furthermore, it is possible to perform the grouping for each viewer group having a common interest estimated from the viewing tendency without the viewer performing a troublesome input operation. In addition, since the grouping is not limited to the grouping based on information input by the viewer, the degree of freedom in the grouping can be increased.

Hitherto, the present invention has been described with reference to the embodiments, but the present invention is not limited to the above embodiments. Inventions modified within a range without contradictory to the present invention and inventions equivalent to the present invention are also included in the present invention. In addition, each of the embodiments and each of the modifications, and technical means included in each of the embodiments or each of the modifications can be appropriately combined within a range not contradictory to the present invention.

For example, the generation unit 31C may generate, for a specific user terminal 20, the distribution data different from distribution data of another user terminal 20. As an example, the generation unit 31C may generate the distribution data in which the comment area CA not grouped is displayed for a user terminal 20 specified by a terminal ID set by a distributor. As a result, the distributor can browse all the comments by setting the user terminal 20 of the distributor. For example, the distributor may perform a reaction (for example, posting a thank-you comment) to a specific comment from among all the comments. Therefore, by browsing all the comments, the distributor does not need to browse the comment while switching the group comment, and it is easy to perform the reaction.

In addition, the grouping unit 31B may perform the grouping without referring to the history information D1. For example, the grouping unit 31B may perform the grouping such that the number of viewers belonging to the group is a predetermined number (for example, 20 viewers). Alternatively, the grouping unit 31B may perform the grouping such that viewers whose viewing start times of the moving image are included in a predetermined range (for example, ten minutes from a plurality of reference times) belong to the same group. In these cases, the grouping unit 31B may perform both of the grouping with referring to the history information D1 and the grouping without referring to the history information D1.

In addition, at least a part of each functional unit of the distribution server 30 may be disposed in either the game server 60 or another external server. Functional units disposed in different servers function as the distribution system 100 in cooperation. In this case, control programs of the servers function as a computer program of the distribution system 100 in cooperation.

Hereinafter, various aspects derived from the above-described embodiments and modifications will be described. Incidentally, in order to facilitate understanding of each aspect, reference signs illustrated in the accompanying drawings are added. Note that the reference signs are not intended to limit the present invention to the illustrated form.

### (Supplement 1)

A distribution system 100 that distributes distribution data including a moving image to a plurality of user terminals 20 and comprises a computer 31, wherein
the computer 31:
receives a posting operation of a comment on the moving image from each of the plurality of user terminals 20;
stores posting history information D2 including information indicating a posting tendency of the comment so as to be distinguishable for each of the user terminals 20;
performs grouping such that each of the user terminals 20 belongs to at least one of a plurality of groups based on the posting history information D2;
extracts the comment posted from the user terminal 20 for each of the groups to which the user terminal 20 belongs as a group comment; and
generates the distribution data so as to display a group comment area GA1, GA2 in which the group comment is displayed.

### (Supplement 2)

The distribution system 100 according to Supplement **1,** wherein the posting history information D2 includes the number of posts per unit time for each of the user terminals 20 as the information indicating the posting tendency.

### (Supplement 3)

The distribution system 100 according to Supplement 1 or 2, wherein the computer 31 calculates the total number of posts per unit time of the user terminals 20 included in the group as a group posting frequency, or calculates the total number of posts within a predetermined time of the user terminals 20 included in the group as a total posting amount, and performs the grouping such that the group posting frequency or the total posting amount falls within a predetermined range.

### (Supplement 4)

The distribution system 100 according to Supplement 3, wherein the computer 31 performs the grouping when the total number of posts per unit time or the total number of posts within a predetermined time of the comments from the plurality of user terminals 20 exceeds the predetermined range during distribution of the moving image.

### (Supplement 5)

The distribution system 100 according to Supplement 4, wherein the computer 31 performs the grouping again after performing the grouping and when the group posting frequency or the total posting amount falls within the predetermined range during distribution of the moving image.

### (Supplement 6)

The distribution system 100 according to any one of Supplements 1 to 3, wherein the computer 31:
calculates the number of posts per unit time for each of the user terminals 20 for a predetermined sampling time from start of distribution of the moving image; and
performs the grouping such that each of the user terminals 20 belongs to the at least one group during distribution of the moving image.

### (Supplement 7)

The distribution system 100 according to any one of Supplements 1 to 6, wherein the computer 31 performs the grouping by calculating the number of posts per unit time for each of the user terminals 20 in a predetermined range of time.

### (Supplement 8)

The distribution system 100 according to Supplement 1, wherein
the computer 31:
stores the posting history information D2 so as to include information indicating a content of the comment;
analyzes the comment to decide a comment attribute of the comment; and
performs the grouping such that the user terminals 20 associated with the same comment attribute belong to the same group.

### (Supplement 9)

The distribution system 100 according to any one of Supplements 1 to 8, wherein the computer 31 stores viewing history information D3 including information indicating a viewing tendency of the moving image so as to be distinguishable for each of the user terminals 20, and performs pre-grouping on the plurality of user terminals 20 based on the viewing history information D3.

### (Supplement 10)

The distribution system 100 according to any one of Supplements 1 to 9, wherein
the computer 31
further receives a posting operation of a reply comment to the comment, and
performs the grouping such that a reply user terminal 20 that has posted the reply comment and a posted user terminal 20 that has posted the comment that is a target of the reply comment belong to the same group.

### (Supplement 11)

The distribution system 100 according to any one of Supplements 1 to 10, wherein the computer 31 performs the grouping such that the number of the plurality of groups is a predetermined number.

### (Supplement 12)

The distribution system 100 according to any one of Supplements 1 to 11, wherein the computer 31 performs the grouping based on the posting history information D2 of the comment posted on the moving image which has been live-distributed.

### (Supplement 13)

A control program PG for a distribution system 100 that distributes distribution data including a moving image to a plurality of user terminals 20 and comprises a computer 31, the control program PG causing the computer 31:
to receive a posting operation of a comment on the moving image from each of the plurality of user terminals 20;
to store posting history information D2 including information indicating a posting tendency of the comment so as to be distinguishable for each of the user terminals 20;
to perform grouping such that each of the user terminals 20 belongs to at least one of a plurality of groups based on the posting history information D2;
to extract the comment posted from the user terminal 20 for each of the groups to which the user terminal 20 belongs as a group comment; and
to generate the distribution data so as to display a group comment area GA1, GA2 in which the group comment is displayed.

### (Supplement 14)

A control method for a distribution system 100 that distributes distribution data including a moving image to a plurality of user terminals 20 and comprises a computer 31, wherein
the computer 31:
receives a posting operation of a comment on the moving image from each of the plurality of user terminals 20;
stores posting history information D2 including information indicating a posting tendency of the comment so as to be distinguishable for each of the user terminals 20;
performs grouping such that each of the user terminals 20 belongs to at least one of a plurality of groups based on the posting history information D2;
extracts the comment posted from the user terminal 20 for each of the groups to which the user terminal 20 belongs as a group comment; and
generates the distribution data so as to display a group comment area GA1, GA2 in which the group comment is displayed.

According to the distribution system 100 described in Supplement 1, the control program PG described in Supplement 13, and the control method described in Supplement 14, the grouping is performed such that each user terminal 20 belongs to at least one of a plurality of groups. Therefore, since the comment can be displayed for each group, visibility of the comment is improved. As a result, it is easy for the viewer to confirm a content of the displayed comment, and reduction of willingness to post the comment and willingness to view the moving image can be suppressed. Furthermore, since the number of posts of comments can be adjusted to an appropriate number for each group based on a posting tendency, the number of displayed comments can be adjusted to an appropriate number. In addition, since the grouping is not limited to grouping based on information input by the viewer, the degree of freedom in the grouping can be increased.

According to the distribution systems 100 described in Supplements 2 and **3,** the grouping can be performed such that the number of posts for each group is an appropriate number based on the number of posts estimated from the posting tendency.

According to the distribution system 100 described in Supplement **4,** groups can be dynamically created during distribution of the moving image, and the grouping can be performed such that the number of posts for each group is an appropriate number.

According to the distribution system 100 described in Supplement 5, when the number of viewers or the number of posts decreases during distribution of the moving image, the grouping can be performed such that the number of posts for each group is an appropriate number.

According to the distribution system 100 described in Supplement 6, a change in the posting frequency according to a current viewing environment can be reflected in the grouping. Furthermore, the grouping can be performed such that the number of posts for each group is an appropriate number for each moving image. Therefore, a fluctuation in the posting tendency due to a difference in a content of the moving image can be reflected in the grouping.

According to the distribution system 100 described in Supplement 7, a fluctuation in the posting tendency according to a period for each viewer can be reflected in the grouping.

According to the distribution system 100 described in Supplement 8, the grouping unit 31B can perform the grouping into a group of viewers who are fans and a group of viewers who are anti-fans. Furthermore, the grouping unit 31B can perform the grouping based on a tendency of contents of the comments of viewers. Therefore, the grouping unit 31B can perform the grouping such that the comments having close contents are displayed.

According to the distribution system 100 described in Supplement 9, it is possible to perform the grouping for each viewer group having a common interest estimated from the viewing tendency.

According to the distribution system 100 described in Supplement 10, viewers who make the reply comments belong to the same group, and can enjoy viewing the moving image while browsing the comments of the viewers. Furthermore, when bidirectional communication using the reply comment is repeated, the grouping can be performed such that exchange of the comments is displayed.

According to the distribution system 100 described in Supplement 11, when the number of viewers can be predicted in advance, the grouping into an appropriate number of groups can be performed.

It is more difficult to confirm the comment during live distribution. However, according to the distribution system 100 described in Supplement 11, the grouping reflecting the posting tendency during the live distribution can be performed.

In Patent Literature 1, input information is input at the time of login. The input of the input information is troublesome for a viewer. Therefore, the viewer may fail to input the input information or does not input correct information in some cases. In addition, the grouping cannot be performed in relation to the moving image viewed by the viewer. In order to solve this, some or all of the above embodiments can also be described as in the following Supplements. As a result, the grouping is performed such that each user terminal belongs to at least one of a plurality of groups, and the comment can be displayed for each of the groups.

### (Supplement 15)

A distribution system 100 that distributes distribution data including a moving image to a plurality of user terminals 20 and comprises a computer 31, wherein
the computer 31:
stores viewing history information D3 including information indicating a viewing tendency of the moving image so as to be distinguishable for each of the user terminals 20;
receives a posting operation of a comment on the moving image from each of the plurality of user terminals 20;
performs grouping such that each of the user terminals 20 belongs to at least one of a plurality of groups based on the viewing history information D3;
extracts the comment posted from the user terminal 20 for each of the groups to which the user terminal 20 belongs as a group comment; and
generates the distribution data so as to display a group comment area GA1, GA2 in which the group comment is displayed.

### (Supplement 16)

The distribution system 100 according to Supplement 15, wherein the viewing history information D3 includes information indicating an attribute of the moving image viewed on the user terminal as information indicating the viewing tendency.

### (Supplement 17)

The distribution system 100 according to Supplement 16, wherein the computer 31 acquires the attribute of the moving image from the game device 70 or the game server 60.

### (Supplement 18)

The distribution system 100 according to Supplement 16 or 17, wherein
the attribute of the moving image is a player attribute indicating a player who fights a battle type game, and
the computer 31 performs the grouping such that the user terminals 20 associated with the same player attribute belong to the same group.

### (Supplement 19)

The distribution system 100 according to Supplement 18, wherein
the computer 31
stores player identification information for uniquely identifying the player in association with moving image identification information for uniquely identifying the moving image while the player identification information is included in the viewing history information D3, and
stores the player identification information associated with the moving image identification information of a plurality of the moving images viewed on the user terminal is stored as the player attribute.

### (Supplement 20)

The distribution system 100 according to any one of Supplements 16 to 18, wherein
the attribute of the moving image is a game attribute indicating a game, and
the computer 31 performs the grouping such that the user terminals 20 associated with the same game attribute belong to the same group.

### (Supplement 21)

The distribution system 100 according to Supplement 20, wherein
the computer 31
stores game identification information for uniquely identifying the game in association with moving image identification information for uniquely identifying the moving image while the game identification information is included in the viewing history information D3, and
stores the game identification information associated with the moving image identification information of a plurality of the moving images viewed on the user terminal 20 is stored as the game attribute.

### (Supplement 22)

The distribution system 100 according to any one of Supplements 15 to 21, wherein the computer 31 performs the grouping based on the viewing history information D3 in a predetermined range of time.

### (Supplement 23)

The distribution system 100 according to any one of Supplements 15 to 22, wherein the computer 31 performs the grouping such that the number of the plurality of groups is a predetermined number.

### (Supplement 24)

A control program PG for a distribution system 100 that distributes distribution data including a moving image to a plurality of user terminals 20 and comprises a computer 31, the control program PG causing the computer 31:
to store viewing history information D3 including information indicating a viewing tendency of the moving image so as to be distinguishable for each of the user terminals 20;
to receive a posting operation of a comment on the moving image from each of the plurality of user terminals **20;**
to perform grouping such that each of the user terminals 20 belongs to at least one of a plurality of groups based on the viewing history information **D3;**
to extract the comment posted from the user terminal 20 for each of the groups to which the user terminal 20 belongs as a group comment; and
to generate the distribution data so as to display a group comment area GA1, GA2 in which the group comment is displayed.

### (Supplement 25)

A control method for a distribution system 100 that distributes distribution data including a moving image to a plurality of user terminals 20 and comprises a computer 31, wherein
the computer 31:
stores viewing history information D3 including information indicating a viewing tendency of the moving image so as to be distinguishable for each of the user terminals 20;
receives a posting operation of a comment on the moving image from each of the plurality of user terminals 20;
performs grouping such that each of the user terminals 20 belongs to at least one of a plurality of groups based on the viewing history information D3;
extracts the comment posted from the user terminal 20 for each of the groups to which the user terminal 20 belongs as a group comment; and
generates the distribution data so as to display a group comment area GA1, GA2 in which the group comment is displayed.

According to the distribution system 100 described in Supplement 15, the control program PG described in Supplement 24, and the control method described in Supplement 25, grouping is performed such that each user terminal 20 belongs to at least one of a plurality of groups. Therefore, since the comment can be displayed for each group, visibility of the comment is improved. As a result, it is easy for the viewer to confirm a content of the displayed comment, and reduction of the viewer's willingness to post the comment and the viewer's willingness to view the moving image can be suppressed. Furthermore, it is possible to perform grouping for each viewer group having a common interest estimated from the viewing tendency without the viewer performing a troublesome input operation. In addition, since the grouping is not limited to grouping based on information input by the viewer, the degree of freedom in the grouping can be increased.

According to the distribution system 100 described in Supplement 16, a content of the moving image viewed in the past is reflected in the grouping, and the comment appropriate for the viewer tends to be displayed.

According to the distribution system 100 described in Supplement 17, the distribution server 30 can acquire the player attribute or the game attribute that is difficult to acquire.

According to the distribution system 100 described in Supplement 18 or 19, viewers whose supported player is common belong to the same group. Therefore, the viewers can communicate with each other by the posted comments and enjoy viewing the moving image more.

According to the distribution system 100 described in Supplement 20 or 21, viewers whose interested game is common belong to the same group. Therefore, the viewers can communicate with each other by the posted comments and enjoy viewing the moving image more.

According to the distribution system 100 described in Supplement 22, a fluctuation in the viewing tendency according to a period for each viewer can be reflected in the grouping.

According to the distribution system 100 described in Supplement 23, when the number of viewers can be predicted in advance, the grouping into an appropriate number of groups can be performed.

### Reference Signs List

- 20: :User terminal
- 31: :Distribution control unit (computer)
- 60: :Game server
- 70: :Game terminal (game device)
- 100: :Distribution system
- PG: :Control program
- D2: :Posting history information
- D3: :Viewing history information
- GA1: :Group comment area
- GA2: :Group comment area

## Claims

1. A distribution system that distributes distribution data including a moving image to a plurality of user terminals and comprises a computer, wherein
the computer:
receives a posting operation of a comment on the moving image from each of the plurality of user terminals;
stores posting history information including information indicating a posting tendency of the comment so as to be distinguishable for each of the user terminals;
performs grouping such that each of the user terminals belongs to at least one of a plurality of groups based on the posting history information;
extracts the comment posted from the user terminal for each of the groups to which the user terminal belongs as a group comment; and
generates the distribution data so as to display a group comment area in which the group comment is displayed.

2. The distribution system according to claim **1,** wherein the posting history information includes the number of posts per unit time for each of the user terminals as the information indicating the posting tendency.

3. The distribution system according to claim 1 or 2, wherein the computer calculates the total number of posts per unit time of the user terminals included in the group as a group posting frequency, or calculates the total number of posts within a predetermined time of the user terminals included in the group as a total posting amount, and performs the grouping such that the group posting frequency or the total posting amount falls within a predetermined range.

4. The distribution system according to claim 3, wherein the computer performs the grouping when the total number of posts per unit time or the total number of posts within a predetermined time of the comments from the plurality of user terminals exceeds the predetermined range during distribution of the moving image.

5. The distribution system according to claim 4, wherein the computer performs the grouping again after performing the grouping and when the group posting frequency or the total posting amount falls within the predetermined range during distribution of the moving image.

6. The distribution system according to claim 1 or **2,** wherein the computer:
calculates the number of posts per unit time for each of the user terminals for a predetermined sampling time from start of distribution of the moving image; and
performs the grouping such that each of the user terminals belongs to the at least one group during distribution of the moving image.

7. The distribution system according to claim 1 or 2, wherein the computer performs the grouping by calculating the number of posts per unit time for each of the user terminals in a predetermined range of time.

8. The distribution system according to claim 1, wherein
the computer:
stores the posting history information so as to include information indicating a content of the comment;
analyzes the comment to decide a comment attribute of the comment; and
performs the grouping such that the user terminals associated with the same comment attribute belong to the same group.

9. The distribution system according to claim 1 or 2, wherein the computer stores viewing history information including information indicating a viewing tendency of the moving image so as to be distinguishable for each of the user terminals, and performs pre-grouping on the plurality of user terminals based on the viewing history information.

10. The distribution system according to claim 1 or 2, wherein
the computer:
further receives a posting operation of a reply comment to the comment; and
performs the grouping such that a reply user terminal that has posted the reply comment and a posted user terminal that has posted the comment that is a target of the reply comment belong to the same group.

11. The distribution system according to claim 1 or 2, wherein the computer performs the grouping such that the number of the plurality of groups is a predetermined number.

12. The distribution system according to claim 1 or 2, wherein the computer performs the grouping based on the posting history information of the comment posted on the moving image which has been live-distributed.

13. A control program for a distribution system that distributes distribution data including a moving image to a plurality of user terminals and comprises a computer, the control program causing the computer:
to receive a posting operation of a comment on the moving image from each of the plurality of user terminals;
to store posting history information including information indicating a posting tendency of the comment so as to be distinguishable for each of the user terminals;
to perform grouping such that each of the user terminals belongs to at least one of a plurality of groups based on the posting history information;
to extract the comment posted from the user terminal for each of the groups to which the user terminal belongs as a group comment; and
to generate the distribution data so as to display a group comment area in which the group comment is displayed.

14. A control method for a distribution system that distributes distribution data including a moving image to a plurality of user terminals and comprises a computer, wherein
the computer:
receives a posting operation of a comment on the moving image from each of the plurality of user terminals;
stores posting history information including information indicating a posting tendency of the comment so as to be distinguishable for each of the user terminals;
performs grouping such that each of the user terminals belongs to at least one of a plurality of groups based on the posting history information;
extracts the comment posted from the user terminal for each of the groups to which the user terminal belongs as a group comment; and
generates the distribution data so as to display a group comment area in which the group comment is displayed.
